# EUROPÄISCHE PATENTANMELDUNG

(11) **EP 0 573 741 A1**
(43) Veröffentlichungstag der Anmeldung: **15.12.1993**
(21) Anmeldenummer: 93104116.4
(22) Anmeldetag: 13.03.1993
(51) Int. Cl.: B60R 22/20, B60R 22/24

(54) **Dreipunktsicherheitsgurtsystem für Kraftfahrzeuge**

(30) Priorität: 06.06.1992 DE 4218792
(71) Anmelder: Bayerische Motoren Werke Aktiengesellschaft, 80788 München (DE)
(72) Erfinder: Ball, Wilfried, W-8312 Dingolfing (DE); Kraft, Hans-Joachim, W-8011 Kirchstockach (DE); Haberl, Josef, W-8011 Aschheim (DE); Kleemann, Wolfgang, W-8130 Starnberg (DE)

(57) **Zusammenfassung**

Die Erfindung beschreibt einen Dreipunktsicherheitsgurtsystem, bei dem der obere Umlenk- bzw. Befestigungspunkt (8) für das Gurtband (7) nicht an der B-Säule einer Fahrzeugkarosserie angeordnet werden kann. Um einerseits die Optik der Fahrzeugkarosserie (1) bzw. die Linienführung nicht zu stören, andererseits aber einen optimalen Gurtbandverlauf im Crashfall zu erhalten, sieht die Erfindung einen verlagerbaren Gurtpunkt (8) vor. Im Normalfall ist dieser Gurtpunkt (8) unten gehalten und befindet sich dann im Bereich der Fensterbrüstung (3) oder noch tiefer und damit von außen nicht einsehbar. Im Crashfall schießt der Gurtpunkt nach oben (8') und sorgt so für einen Gurtbandverlauf, der dem Fahrzeuginsassen (6) optimalen Schutz gewährt. In einer zweckmäßigen Ausführung erfolgt die Verlagerung des Gurtpunktes über Federkraft.

## Beschreibung

Die Erfindung bezieht sich auf ein Dreipunktsicherheitsgurtsystem für Kraftfahrzeuge, wie es im Oberbegriff des Hauptanspruchs beschrieben ist.

Herkömmliche Dreipunktsicherheitsgurtsysteme haben an der B-Säule der Fahrzeugkarosserie einen Umlenk- bzw. Befestigungspunkt für das Gurtband. Aus Gründen eines optimalen Gurtbandverlaufes liegt dieser Gurtpunkt in der Regel höher als die Fensterbrüstung der Fahrzeugkarosserie. Bei Fahrzeugen ohne eine derartige B-Säule - hier seien insbesondere die Fahrzeuge mit offenem Aufbau, also Cabriolets genannt - kann der besagte Gurtpunkt dagegen allenfalls in Höhe der Fensterbrüstung angeordnet sein.

Die DE-PS 27 27 125 sieht für eine solchen Fall einen Höcker vor, der auf der Fensterbrüstung aufgesetzt bzw. angeformt ist. An der höchsten Stelle des Höckers tritt das Gurtband aus. Durch diese Maßnahme läßt sich zwar der Gurtbandverlauf optimieren, jedoch die Optik des Fahrzeugs wird verschlechtert.

Aufgabe der Erfindung ist es, bei einem Kraftfahrzeug, bei dem der besagte Gurtpunkt nicht an einer B-Säule angeordnet werden kann, den Anbringungsort für den Gurtpunkt so auszugestalten, daß einerseits im Crashfall ein optimaler Schutz durch den Sicherheitsgurt gewährleistet ist, andererseits aber die Optik des Fahrzeuges nicht gestört wird.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung läßt sich also der Gurtpunkt nach oben verlagern, sobald das Fahrzeug über einen vorgegebenen Wert hinaus verzögert wird. Dadurch wird erreicht, daß im Normalfall der besagte Gurtpunkt allenfalls in Höhe der Fensterbrüstung liegt und da er innenliegend ist, von dieser verdeckt wird und damit von außen nicht sichtbar ist. Er stört so nicht die Linienführung und damit das optische Erscheinungsbild der Karosserie.

Im Crashfall dagegen verlagert er sich nach oben und sorgt für einen für die Sicherheit der angegurteten Person optimalen Verlauf des Gurtbandes.

Die Verlagerung des Gurtpunktes kann auf verschiedene Art bewerkstelligt werden. So eignen sich hydraulische oder pneumatische Stellglieder ebenso wie elektrische Stellglieder. Wo es angezeigt ist, können auch pyrotechnische Elemente verwendet werden.

Die Entriegelung für die Verlagerung des Gurtpunktes kann in zweckmäßiger Weise über einen vorhandenen Airbagsensor initiiert werden. Das ist besonders dann vorteilhaft, wenn die Verlagerung des Gurtpunktes elektromechanisch oder pyrotechnisch erfolgt.

In einer besonders einfachen und zweckmäßigen Ausführungsform wird für die Verlagerung des Gurtbandes eine Feder herangezogen.

Dreipunktsicherheitsgurtsysteme sind in der Regel so ausgebildet, daß das Gurtband von einem im unteren Bereich der Karosserieseitenwand befestigten Gurtaufroller nach oben zu einer Umlenköse verläuft. Dort wird es umgelenkt und verläuft quer über die Schulter des Fahrzeuginsassen zu einer Schloßzunge, die in ein im Bereich des Kardantunnels oder am Sitz bzw. der Sitzschiene befestigtes Gurtschloss eingesteckt ist. Von der Schloßzunge führt das Gurtband über das Becken des Fahrzeuginsassen zurück zur Außenseite und ist dort in der Nähe des Karosseriebodens oder am Sitz bzw. der Sitzschiene befestigt.

In einer vorteilhaften Ausführungsform ist bei einem solchen Gurtbandverlauf der Gurtpunkt als eine Umlenköse ausgebildet, die das Gurtband in Richtung Oberkörper des Fahrzeuginsassen umlenkt. Die Umlenköse ist in diesem Fall mit einem Gleitstück verbunden, das in einer karosseriefesten Führung vertikal verfahrbar ist. Mit diesen Mitteln ist in einfacher Weise die Verlagerbarkeit des Umlenkpunktes gewährleistet.

Sofern die Verlagerung durch Federkraft geschehen soll, ist zwischen dem Gleitstück und einer karosseriefesten Abstützung eine Druckfeder vorgesehen. Die Druckfeder wird zusammengedrückt und damit vorgespannt, sobald der Gurtpunkt sich in seine untere, also in seine Normallage bewegt bzw. sich dort befindet. Ein Verriegelungsmechanismus, der in zweckmäßiger Weise auf die Fahrzeugverzögerung anspricht, hält die Feder im vorgespannten Zustand.

Weitere vorteilhafte Ausgestaltungen der Erfindung ergeben sich aus der nachfolgenden Beschreibung eines Ausführungsbeispiels anhand der dazugehörigen Zeichnung. Dabei zeigt
- Figur 1: in schematischer Darstellung bruchstückhaft eine Fahrzeugkarosserie mit offenem Aufbau und einen Fahrzeugsitz mit einer darauf sitzenden Person,
- Figur 2 und 3: einen Gurtpunktverlagerungsmechanismus im vorgespannten und gelösten Zustand, der im Bereich des Kreisausschnittes A nach Figur 1 vorgesehen ist, im vergrößerten Maßstab.

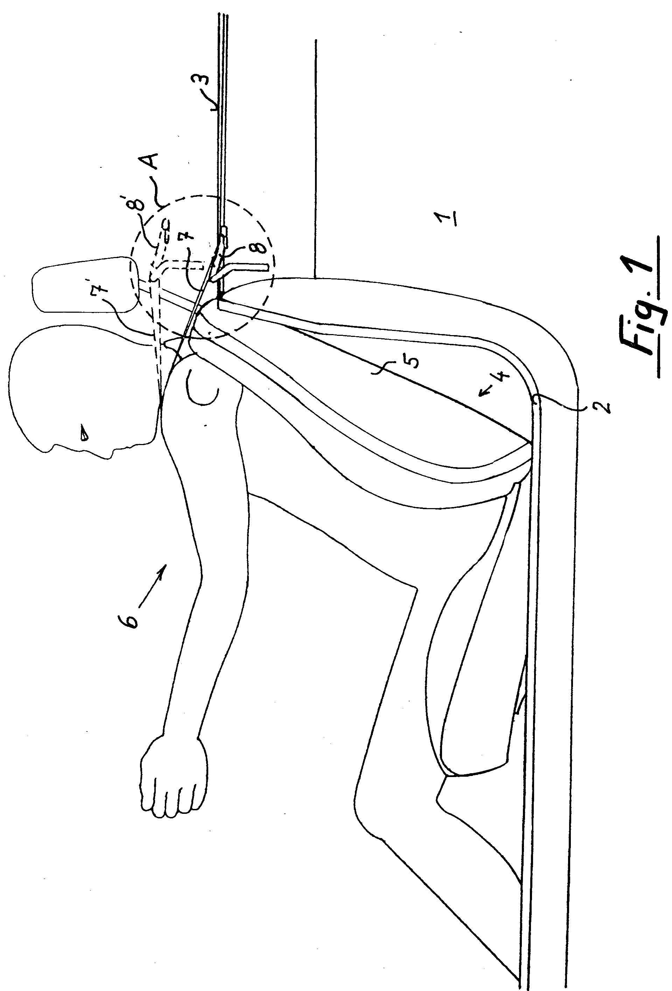

Der in Figur 1 dargestellte Karosserieabschnitt 1 weist einen Türausschnitt 2 und eine Fensterbrüstung 3 auf. Im Bereich des Türausschnitts 2 ist im Fahrzeuginneren ein Sitz 4 vorgesehen mit einer Rückenlehne 5. Auf dem Fahrzeugsitz sitzt eine Person 6.

Diese Person 6 wird von einem Dreipunktsicherheitsgurtsystem gehalten, von dem nur ein Gurtabschnitt 7 in Figur 1 dargestellt ist. Der Gurtbandabschnitt 7 ist dabei Teil eines üblichen, weiter oben bereits beschriebenen Dreipunktsicherheitsgurtsystems. Dabei tritt das Gurtband 7 aus einer Umlenköse 8 und wird in Richtung zum Oberkörper des Fahrzeuginsassen umlenkt. Zu diesem Zweck ist die Umlenköse 8 im Bereich der Seitenwand der Fahrzeugkarosserie 1 in Nachbarschaft der Oberkante der Rückenlehne 5 angeordnet. Sie liegt dabei in Höhe der Fensterbrüstung 3 und stört so die Linienführung der Karosserie und damit das Erscheinungsbild des Fahrzeuges nicht.

Nach der Erfindung wird die Umlenköse 8 und damit das Gurtband 7 nach oben verlagert, sobald das Fahrzeug eine übermäßige Verzögerung erfährt. Diese Lage ist in Figur 1 in gestrichelten Linien dargestellt. Es ist die weiter oben sich befindende Umlenköse 8' erkennbar, die das Gurtband 7' ebenfalls wieder in Richtung zum Oberkörper des Fahrzeuginsassen umlenkt, allerdings nun in einem anderen Winkel. Der Gurtbandabschnitt verläuft leicht nach unten geneigt zum Oberkörper. Damit ist ein Gurtbandverlauf erzielt, der dem Fahrzeuginsassen optimalen Schutz gewährt.

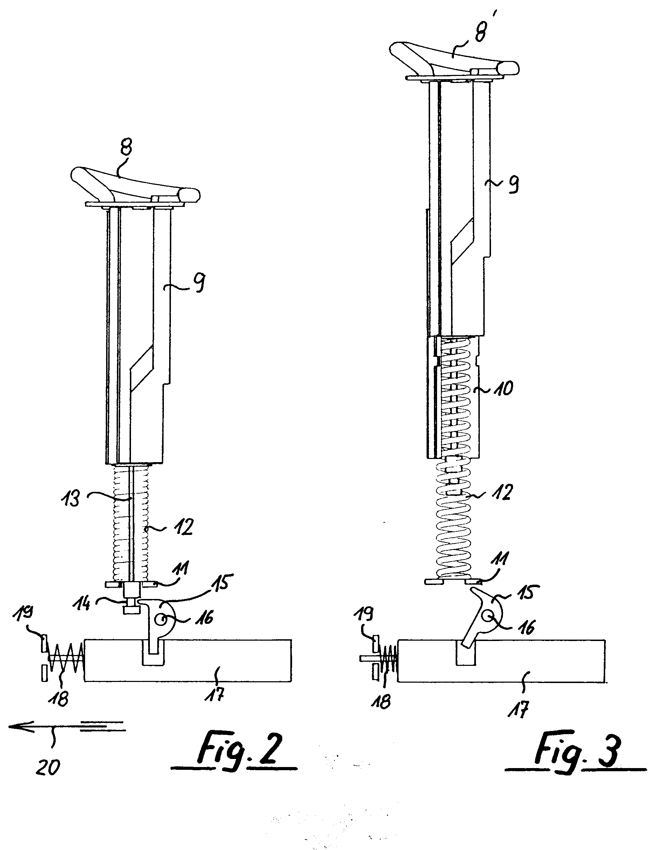

Der Verlagerungsmechanismus ist in den Figur 2 und 3 dargestellt. Figur 2 zeigt dabei die Umlenköse 8 in ihrer unteren, normalen Position, in Figur 3 in ihrer ausgefahrenen Stellung. Die Umlenköse 8, die in der Regel aus einem Metallring besteht, ist mit einem Gleitstück 9 fest verbunden. Das Gleitstück 9 läßt sich entlang einer Führung 10, die in nicht näher dargestellter Weise mit der Fahrzeugkarosserie 1 verbunden ist, nach oben und unten verfahren. Zwischen dem Gleitstück 9 und einer karosseriefesten Abstützung 11 liegt eine Druckfeder 12. Nach Figur 2, also bei nach unten verlagerten Umlenköse 8 ist die Druckfeder 12 zusammengedrückt und damit vorgespannt.

Das Gleitstück 9 trägt einen nach unten durch die Druckfeder 12 hindurchragenden Stift 13, der in seinem unteren austretenden Ende eine kopfartige Verdickung mit einer Ringnut 14 aufweist. In die Ringnut 14 greift die Nase einer Sperrklinke 15. Sie läßt sich um eine karosseriefeste Schwenkachse 16 verdrehen. Hierzu ist eine Trägheitsmasse 17 vorgesehen, die sich in Fahrzeuglängsrichtung bewegt und hierfür in einer nicht näher dargestellten karosseriefesten Führung läuft, die sich in Fahrzeuglängsrichtung bewegt. Die Fahrzeuglängsrichtung bzw. die Fahrtrichtung ist in Figur 2 durch den Pfeil 18 aufgezeigt. In eine Aussparung der Trägheitsmasse 17 greift ein Arm der Sperrklinke 15 ein. Die Trägheitsmasse 17 ist über eine Druckfeder 18, die sich an einem karosseriefesten Punkt 19 abstützt, in ihrer in Figur 2 gezeichneten Lage gehalten.

Tritt nun eine Fahrzeugverzögerung ein, die einen vorgegebenen Wert überschreitet, wird die Masse 17 aufgrund ihrer innewohnenden Trägheit nach vorne in Richtung des Pfeiles 18 bewegt. Sie drückt auf den Arm der Sperrklinke 15 und dreht diese über den Schwenkzapfen 16 in Richtung Uhrzeigersinn. Der Stift 13 kommt frei, die Druckfeder 12 entspannt sich und verlagert augenblicklich die Umlenköse 8 nach oben in die in Figur 1 gestrichelt dargestellte Position.

## Patentansprüche

1. Dreipunktsicherheitsgurtsystem für Kraftfahrzeuge mit einem als Gurtbandumlenkung oder Gurtbandbefestigung dienenden Gurtpunkt im Bereich einer Seitenwand der Fahrzeugkarosserie und in Nachbarschaft der Oberkante einer Rückenlehne eines dem Sicherheitsgurt zugeordneten Fahrzeugsitzes, dadurch gekennzeichnet, daß sich der Gurtpunkt beim überschreiten einer vorgegebenen Fahrzeugverzögerung nach oben verlagert.

2. Sicherheitsgurtsystem nach Anspruch 1, dadurch gekennzeichnet, daß für die Verlagerung des Gurtpunktes elektrische Stellglieder vorgesehen sind.

3. Sicherheitsgurtsystem nach Anspruch 1, dadurch gekennzeichnet, daß die Verlagerung des Gurtpunktes über hydraulische oder pneumatische Stellglieder erfolgt.

4. Sicherheitsgurtsystem nach Anspruch 1, dadurch gekennzeichnet, daß ein pyrotechnisches Treibmittel den Gurtpunkt verlagert.

5. Sicherheitsgurtsystem nach Anspruch 1, dadurch gekennzeichnet, daß der Gurtpunkt durch Federkraft verlagerbar ist.

6. Sicherheitsgurtsystem nach einem der Ansprüche 1 bis 5, dadurch gekennzeichnet, daß der Gurtpunkt durch eine Umlenköse (8) mit durchlaufendem Gurtband (7) gebildet ist, die mit einem in einer karosseriefesten Führungsschiene (10) im wesentlichen vertikal verfahrbaren Gleitstück (9) fest verbunden ist.

7. Sicherheitsgurtsystem nach Anspruch 5 und 6, dadurch gekennzeichnet, daß zwischen dem Gleitstück (9) und einer karosseriefesten Abstützung (11) eine bei nach unten verlagertem Gurtpunkt vorgespannte Druckfeder (12) angeordnet ist, wobei ein auf die Fahrzeugverzögerung ansprechender Verriegelungsmechanismus die Druckfeder (12) in dem vorgespannten Zustand hält.

8. Sicherheitsgurtsystem nach Anspruch 7, dadurch gekennzeichnet, daß der Verriegelungsmechanismus gebildet ist aus einem mit dem Gleitstück (9) fest verbundenen und nach unten ragenden Stift (13) mit einer umlaufenden Nut (14), in die eine durch eine Trägheitsmasse (17) verschwenkbare Sperrklinke (15) bei nach unten verlagertem Gurtpunkt eingreift.

9. Sicherheitsgurtsystem nach Anspruch 8, dadurch gekennzeichnet, daß die Trägheitsmasse (17) gegen Federkraft im wesentlichen in Fahrzeuglängsrichtung verschiebbar ist.
